(19) Europäisches Patentamt
European Patent Office
Office européen des brevets

(11) **EP 4 239 015 B1**

(12) **EUROPEAN PATENT SPECIFICATION**

(45) Date of publication and mention
of the grant of the patent:
**22.05.2024   Bulletin 2024/21**

(21) Application number: **22159608.3**

(22) Date of filing: **02.03.2022**

(51) International Patent Classification (IPC):
*C08F 110/02* (2006.01)    *C08F 210/16* (2006.01)
*C08J 5/18* (2006.01)    *C08L 23/06* (2006.01)

(52) Cooperative Patent Classification (CPC):
(C-Sets available)
**C08J 5/18; C08F 210/16; C08L 23/06;**
C08F 110/02; C08J 2323/06; C08J 2323/08;
C08J 2423/08; C08L 2203/16; C08L 2205/025;
C08L 2205/03                    (Cont.)

(54) **MONOAXIALLY ORIENTED FILM COMPRISING A POLYETHYLENE COMPOSITION**

MONOAXIAL ORIENTIERTE FOLIE MIT EINER POLYETHYLENZUSAMMENSETZUNG

FILM ORIENTÉ MONOAXIALEMENT COMPRENANT UNE COMPOSITION DE POLYÉTHYLÈNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**06.09.2023   Bulletin 2023/36**

(73) Proprietor: **Borealis AG**
**1020 Vienna (AT)**

(72) Inventors:
• **WANG, Jingbo**
**4021 Linz (AT)**
• **BERGER, Friedrich**
**4021 Linz (AT)**
• **ALABRUNE, Arnaud**
**92400 Courbevoie (FR)**
• **POTTER, Elisabeth**
**4021 Linz (AT)**
• **ZACH, Markus**
**4021 Linz (AT)**
• **KLOPF, Herbert**
**4021 Linz (AT)**

(74) Representative: **Maiwald GmbH**
**Elisenhof**
**Elisenstraße 3**
**80335 München (DE)**

(56) References cited:
**EP-A1- 2 746 334**    **EP-B1- 2 907 843**
**US-A1- 2020 181 373**    **US-A1- 2020 325 316**

(52) Cooperative Patent Classification (CPC): (Cont.)

C-Sets
**C08F 210/16, C08F 2/001;**
**C08F 210/16, C08F 4/6492;**
**C08L 23/06, C08L 23/0815, C08L 23/06;**
C08F 110/02, C08F 2500/07, C08F 2500/12;
C08F 210/16, C08F 210/08, C08F 2500/07,
C08F 2500/12, C08F 2500/26

C-Sets

## Description

The present invention relates to a monoaxially oriented film comprising a polyethylene composition having a density of from 945.0 to 970.0 kg/m$^3$ and a melt flow rate MFR$_2$ of from 0.5 to 7.5 g/10 min which comprises a multimodal high density polyethylene (A) and a second high density polyethylene (B) and the use of such as polyethylene composition for the production of a film.

## Technical background

Polymer films are widely used in packaging. These films must obviously protect the contents of the package from damage and the environment.

Polyethylene films are widely used in packaging and are often laminated with a relatively high heat resistant substrate like PET film to prepare a flexible package. However, such laminates cannot be readily recycled due to the presence of two chemically different materials.

To resolve that problem a machine direction oriented polyethylene (MDO PE) or biaxially oriented polyethylene (BOPE) film can be used to replace the PET film. High density polyethylene (HDPE) offers a good alternative to PET in terms of stiffness and thermal resistance. The resulting laminate comprises polyethylene only and is hence fully mechanically recycled.

Monoaxially oriented polyethylene films such as MDO PE films are well established in the art. When straining a polyethylene under uniaxial stress, the orientation becomes aligned in the direction of pull. For instance, US 2020/325316 A1 and WO 2005/092595 disclose multilayer MDO PE films, which can be stretched to a stretch ratio of up to about 10:1. These multilayer films show increased mechanical and impact properties together with sufficient optical properties. However, these properties are not sufficient to replace PET with MDO PE films.

Thus, for being able to exchange PE-PET multilayer laminates with solutions based on films made of one polymeric material such as polyethylene for increasing the recycling rates of packaging material, polyethylene based films need to be provided which show increased stiffness and transparency.

In the present invention it has surprisingly been found that the stiffness and optical properties of monoaxially oriented films based on polyethylene compositions can be improved when adding a second high density polyethylene in amounts of 8 to 30 wt% to a multimodal high density polyethylene.

## Summary of the invention

The present invention relates to a monoaxially oriented film comprising a polyethylene composition having a density of from 945.0 to 970.0 kg/m$^3$, determined according to ISO 1183, and a melt flow rate MFR$_2$ of from 0.5 to 7.5 g/10 min, determined according to ISO 1133 at a temperature of 190°C and a load of 2.16 kg, wherein the polyethylene composition comprises

(A) from 70.0 to 92.0 wt%, based on the total weight of the polyethylene composition, of a multimodal high density polyethylene having a density of from 945 to 970 kg/m$^3$, determined according to ISO 1183, and a melt flow rate MFR$_2$ of 0.05 to 4.0 g/10 min, determined according to ISO 1133 at a temperature of 190°C and a load of 2.16 kg; wherein the multimodal high density polyethylene (A) comprises at least two polyethylene fractions (A-1) and (A-2)

(A-1) from 40 to 60 wt%, based on the total weight of the multimodal high density polyethylene (A), of a first polyethylene fraction having a density of from 955 to 980 kg/m$^3$, determined according to ISO 1183, and a melt flow rate MFR$_2$ of 50 to 600 g/10 min, determined according to ISO 1133 at a temperature of 190°C and a load of 2.16 kg; and
(A-2) from 40 to 60 wt%, based on the total weight of the multimodal high density polyethylene (A), of second polyethylene fraction having a density of from 925 to 970 kg/m$^3$, determined according to ISO 1183, and a melt flow rate MFR$_2$ of 0.00001 to 1.0 g/10 min, determined according to ISO 1133 at a temperature of 190°C and a load of 2.16 kg;

(B) from 8.0 to 30.0 wt%, based on the total weight of the polyethylene composition, of a second high density polyethylene having a density of from 955 to 980 kg/m$^3$, determined according to ISO 1183, and a melt flow rate MFR$_2$ of from 5.0 to 100 g/10 min, determined according to ISO 1133 at a temperature of 190°C and a load of 2.16 kg.

Further, the present invention relates to the use of a polyethylene composition having a density of from 945.0 to 970.0 kg/m$^3$, determined according to ISO 1183, and a melt flow rate MFR$_2$ of from 0.5 to 7.5 g/10 min, determined according to ISO 1133 at a temperature of 190°C and a load of 2.16 kg, wherein the polyethylene composition comprises

(A) from 70.0 to 92.0 wt%, based on the total weight of the polyethylene composition, of a multimodal high density polyethylene having a density of from 945 to 970 kg/m$^3$, determined according to ISO 1183, and a melt flow rate MFR$_2$ of 0.05 to 4.0 g/10 min, determined according to ISO 1133 at a temperature of 190°C and a load of 2.16 kg; wherein the multimodal high density polyethylene (A) comprises at least two polyethylene fractions (A-1) and (A-2)

(A-1) from 40 to 60 wt%, based on the total weight of the multimodal high density polyethylene (A), of a first polyethylene fraction having a density of from 955 to 980 kg/m$^3$, determined according to ISO 1183, and a melt flow rate MFR$_2$ of 50 to 600 g/10 min, determined according to ISO 1133 at a temperature of 190°C and a load of 2.16 kg; and

(A-2) from 40 to 60 wt%, based on the total weight of the multimodal high density polyethylene (A), of second polyethylene fraction having a density of from 925 to 970 kg/m$^3$, determined according to ISO 1183, and a melt flow rate MFR$_2$ of 0.00001 to 1.0 g/10 min, determined according to ISO 1133 at a temperature of 190°C and a load of 2.16 kg;

(B) from 8.0 to 30.0 wt%, based on the total weight of the polyethylene composition, of a second high density polyethylene having a density of from 955 to 980 kg/m$^3$, determined according to ISO 1183, and a melt flow rate MFR$_2$ of from 5.0 to 100 g/10 min, determined according to ISO 1133 at a temperature of 190°C and a load of 2.16 kg for the production of a monoaxially oriented film.

**Definitions**

A polyethylene composition according to the present invention denotes a composition comprising one or more polymers, wherein the molar amounts of the components of the polymer composition add up to a total amount of at least 50 mol% ethylene monomer units.

An 'ethylene homopolymer' denotes a polymer consisting essentially of ethylene monomer units. Due to the requirements of large-scale polymerization it may be possible that the ethylene homopolymer includes minor amounts of comonomer units, which usually is below 0.1 mol%, preferably below 0.05 mol%, most preferably below 0.01 mol% of the ethylene homopolymer.

A polymer is denoted 'ethylene copolymer' if the polymer is derived from ethylene monomer units and at least one alpha-olefin comonomer. The alpha-olefin comonomer preferably is selected from alpha-olefin comonomer with 4 to 8 carbon atoms, more preferably 4 to 6 carbon atoms. Suitable alpha-olefin comonomer species are 1-butene, 1-hexene, 4-methyl-1-pentene, 1-octene or their mixtures. Preferred are 1-butene and 1-hexene.

Polyethylenes are usually classified by means of their density as low density e.g. as polyethylenes (LDPE), linear low density polyethylenes (LLDPE), medium density polyethylenes (MDPE) and high density polyethylenes (HDPE). In literature polyethylenes with a density of at least 940 kg/m$^3$ are usually classified as high density polyethylenes (HDPE).

A polyethylene comprising more than one fraction differing from each other in at least one property, such as weight average molecular weight or comonomer content, is called "multimodal". If the multimodal polyethylene composition or base resin includes two different fractions, it is called "bimodal" and, correspondingly, if it includes three different fractions, it is called "trimodal". The form of the molecular weight distribution curve, i.e. the appearance of the graph of the polymer weight fraction as function of its molecular weight, of such a multimodal polyethylene composition or base resin will show two or more maxima depending on the modality or at least be distinctly broadened in comparison with the curves of the individual fractions.

In contrast to "multimodal" a unimodal polyethylene shows only one maximum in the graph of the polymer weight fraction as function of its molecular weight and a uniform comonomer distribution.

A composition of a bimodal polyethylene and a unimodal polyethylene usually shows trimodal characteristics in behalf of molecular weight and/or comonomer content.

The amounts disclosed in herein relate to weight amounts in % by weight or wt%, if not stated otherwise.

**Detailed description**

The present invention relates to a monoaxially oriented film comprising a polyethylene composition having a density of from 945.0 to 970.0 kg/m$^3$, determined according to ISO 1183, and a melt flow rate MFR$_2$ of from 0.5 to 7.5 g/10 min, determined according to ISO 1133 at a temperature of 190°C and a load of 2.16 kg, wherein the polyethylene composition comprises

(A) from 70.0 to 92.0 wt%, based on the total weight of the polyethylene composition, of a multimodal high density polyethylene having a density of from 945 to 970 kg/m$^3$, determined according to ISO 1183, and a melt flow rate

$MFR_2$ of 0.05 to 4.0 g/10 min, determined according to ISO 1133 at a temperature of 190°C and a load of 2.16 kg; wherein the multimodal high density polyethylene (A) comprises at least two polyethylene fractions (A-1) and (A-2)

(A-1) from 40 to 60 wt%, based on the total weight of the multimodal high density polyethylene (A), of a first polyethylene fraction having a density of from 955 to 980 $kg/m^3$, determined according to ISO 1183, and a melt flow rate $MFR_2$ of 50 to 600 g/10 min, determined according to ISO 1133 at a temperature of 190°C and a load of 2.16 kg; and
(A-2) from 40 to 60 wt%, based on the total weight of the multimodal high density polyethylene (A), of second polyethylene fraction having a density of from 925 to 970 $kg/m^3$, determined according to ISO 1183, and a melt flow rate $MFR_2$ of 0.00001 to 1.0 g/10 min, determined according to ISO 1133 at a temperature of 190°C and a load of 2.16 kg;

(B) from 8.0 to 30.0 wt%, based on the total weight of the polyethylene composition, of a second high density polyethylene having a density of from 955 to 980 $kg/m^3$, determined according to ISO 1183, and a melt flow rate $MFR_2$ of from 5.0 to 100 g/10 min, determined according to ISO 1133 at a temperature of 190°C and a load of 2.16 kg.

Film

The film of the present invention is a monoaxially oriented film. This means that the film is stretched in one direction. The polyethylene chains thereby are oriented in stretching direction. Excluded from the scope of the monoaxially oriented film according to the present invention are biaxially oriented films, i.e. films which are stretched in two directions, i.e. in machine direction and transverse direction.

It is preferred that the film of the present invention is only stretched in machine direction, i.e. is a machine direction oriented (MDO) film.

The film according to the present invention can be a monolayer film or a multilayer film. In case of a multilayer film at least one layer is the film according to the present invention. A multilayer film can also comprise more than one layer, such as two, three four or five layers of the film according to the present invention. The multilayer film can also comprise layers which are different from the film according to the present invention, such as other polyolefin layers, PET layers, polyamide layers or others. It is preferred for increasing the recycling rate of the multilayer films according to the present invention that all polymeric layers are polyolefin based layers, more preferably polyethylene based layers.

Preferably, the film is prepared as cast film or blown film, which is then stretched in one direction, preferably in machine direction.

In case of a multilayer film in one embodiment firstly a monolayer film comprising the polyethylene composition according to the present invention can be formed and stretched to form the monoaxially oriented film and then laminated to other film layers, preferably polyethylene based film layers, which can be oriented or non-oriented.

In a second embodiment of the multilayer film a layer comprising the polyethylene composition according to the present invention can be coextruded or laminated onto other film layers, preferably polyethylene based film layers to form a non-oriented multilayer film.

The non-oriented multilayer film is then oriented in one direction, preferably in machine direction.

The stretch ratio for orienting the film in one direction, preferably in machine direction, is preferably from 2:1 to 10:1, more preferably from 4:1 to 8:1, still more preferably from 5:1 to 7:1.

The film preferably has a thickness of from 5 to 100 μm, preferably from 10 to 75 μm, more preferably from 15 to 50 μm.

It has surprisingly been found that the film according to the present invention shows an improved balance of properties in regard of improved optical properties and improved mechanical properties showing improved stiffness.

The film according to the present invention preferably has one or more, preferably all of the following optical properties:
The film preferably has a haze of not more 20.0 %, preferably not more than 17.5 %, more preferably not more than 15.0%, determined according to ASTM D1003 on a MDO blown film sample (stretch ratio 6:1) having a thickness of 20 μm.

The lower limit of the haze is usually at least 1.0 %, preferably at least 2.5 %, determined according to ASTM D1003 on a MDO blown film sample (stretch ratio 6:1) having a thickness of 20 μm.

Hence, the film preferably has a haze of from 1.0 to 20.0 %, preferably from 1.0 to 17.5%, more preferably from 2.5 to 15.0 %, determined according to ASTM D1003 on a MDO blown film sample (stretch ratio 6:1) having a thickness of 20 μm.

The film preferably has a clarity of at least 90.0 %, preferably at least 92.5 %, more preferably at least 94.0%, determined according to ASTM D1003 on a MDO blown film sample (stretch ratio 6:1) having a thickness of 20 μm.

The upper limit of the clarity is usually not more than 99.0 %, preferably not more than 98.0 %, determined according to ASTM D1003 on a MDO blown film sample (stretch ratio 6:1) having a thickness of 20 μm.

Hence, the film preferably has a clarity of from 90.0 to 99.0 %, preferably from 92.5 to 99.0 %, more preferably from 94.0 to 98.0%, determined according to ASTM D1003 on a MDO blown film sample (stretch ratio 6:1) having a thickness of 20 $\mu$m.

The film according to the present invention preferably has one or more, preferably all of the following mechanical properties:

The film preferably has a tensile modulus in machine direction (TM-MD) of at least 2000 MPa, more preferably at least 2100 MPa, still more preferably at least 2200 MPa, determined according to ISO 527-3 on a MDO blown film sample (stretch ratio 6:1) having a thickness of 20 $\mu$m.

The upper limit of the tensile modulus in machine direction (TM-MD) is usually not more than 3000 MPa, preferably not more than 2800 MPa, determined according to ISO 527-3 on a MDO blown film sample (stretch ratio 6:1) having a thickness of 20 $\mu$m.

Hence, the film preferably has a tensile modulus in machine direction (TM-MD) of from 2000 to 3000 MPa, preferably from 2100 to 3000 MPa, more preferably from 2200 to 2800 MPa, determined according to ISO 527-3 on a MDO blown film sample (stretch ratio 6:1) having a thickness of 20 $\mu$m.

The film preferably has a tensile modulus in transverse direction (TM-TD) of at least 2000 MPa, more preferably at least 2200 MPa, still more preferably at least 2400 MPa, determined according to ISO 527-3 on a MDO blown film sample (stretch ratio 6:1) having a thickness of 20 $\mu$m.

The upper limit of the tensile modulus in transverse direction (TM-TD) is usually not more than 3000 MPa, preferably not more than 2800 MPa, determined according to ISO 527-3 on a MDO blown film sample (stretch ratio 6:1) having a thickness of 20 $\mu$m.

Hence, the film preferably has a tensile modulus in traverse direction (TM-TD) of from 2000 to 3000 MPa, preferably from 2200 to 3000 MPa, more preferably from 2400 to 2800 MPa, determined according to ISO 527-3 on a MDO blown film sample (stretch ratio 6:1) having a thickness of 20 $\mu$m.

It has been shown in the example section on films with different stretch ratios that the monoaxially oriented films according to the invention show a uniform tensile modulus behaviour in both MD and TD direction.

It is preferred that the tensile modulus in machine direction (TM-MD) and the tensile modulus in transverse direction (TM-TD) differ in a range of $\pm$ 15.0%, more preferably of $\pm$ 12.5%, still more preferably of $\pm$ 10.0%, calculated as (TM-MD - TM-TD) / TM-MD.

An improved balance of properties in regard of the optical and mechanical properties of the film according to the present invention can be exemplified by the ratio of a tensile modulus in machine direction (TM-MD) to haze (TM-MD/haze).

The film according to the invention preferably has a ratio of a tensile modulus in machine direction (TM-MD) to haze (TM-MD/haze) of from 100 to 300 [MPa/%], more preferably from 125 to 275 [MPa/%], still more preferably from 150 to 250 [MPa/%], determined on a MDO blown film sample (stretch ratio 6:1) having a thickness of 20 $\mu$m.

The film is preferably produced by blown film extrusion or by cast film extrusion and then stretched in one direction, preferably in machine direction.

Usually in a first step sheets are produced by blown film extrusion or by cast film extrusion. The sheets usually have a thickness of 50 to 1000 $\mu$m, preferably 75 to 750 $\mu$m, more preferably 100 to 500 $\mu$m.

The sheets are then stretched in one direction, preferably in machine direction at stretch ratios as outlined above or below.

These processes are well known in the art and are easily adaptable for producing films comprising the polyethylene composition according to the present invention.

It has been found that the films according to the invention show a good processability, which can be seen e.g. in a low die pressure and stable bubbles during blow film extrusion.

Polyethylene composition

The polyethylene composition comprises from 70.0 to 92.0 wt%, based on the total weight of the polyethylene composition, of the multimodal high density polyethylene (A) and from 8.0 to 30.0 wt%, based on the total weight of the polyethylene composition, of a second high density polyethylene (B).

It is preferred that the polyethylene composition comprises of from 72.5 to 90.0 wt%, more preferably from 75.0 to 87.5 wt%, based on the total weight of the polyethylene composition, of the multimodal high density polyethylene (A).

It is further preferred that the polyethylene composition comprises from 10.0 to 27.5 wt%, more preferably from 12.5 to 25.0 wt%, based on the total weight of the polyethylene composition, of the second high density polyethylene (B).

The polyethylene composition can comprise further components different from the multimodal high density polyethylene (A) and the second high density polyethylene (B).

Other components can be polymers different from the multimodal high density polyethylene (A) and the second high density polyethylene (B) or additives. Usually the amount of other components is not more than 10 wt%, based on the total weight of the polyethylene composition.

It is preferred that the polyethylene composition does not comprise any polymers different from the multimodal high density polyethylene (A) and the second high density polyethylene (B). Thus, it is preferred that the polymeric components of the polyethylene composition consist of the high density polyethylene (A) and the second high density polyethylene (B). The polyethylene composition can comprise usual additives for utilization with polyolefins, such as stabilizers (e.g. antioxidant agents), acid scavengers and/or UV-stabilizers. Preferably, the amount of these additives is 5.0 wt% or below, more preferably 2.5 wt% or below, more preferably 1.0 wt% or below, of the polyethylene composition. The lower limit of the additives, if present, is usually 0.001 wt%, preferably 0.01 wt%.

Additives can be added to the polyethylene composition in form of masterbatches in which the additives are embedded in carrier polymers in concentrated form in order to ensure better distribution of the additives in the polyethylene composition. In the case that the additives are added in form of a masterbatch, the amount of carrier polymer is added to the amount of additives, not to the amount of polymeric components in the polyethylene composition.

The polyethylene composition has a density of from 945.0 to 970.0 kg/m$^3$, preferably from 948.0 to 968.0 kg/m$^3$, more preferably from 950.0 to 965.0 kg/m$^3$, still more preferably from 952.0 to 962 kg/m$^3$, determined according to ISO 1183.

Further, the polyethylene composition has a melt flow rate MFR$_2$ of from 0.5 to 7.5 g/10 min, preferably from 0.7 to 5.0 g/10 min, more preferably from 0.8 to 3.0 g/10 min, still more preferably from 0.9 to 2.0 g/10 min, most preferably from 1.0 to 1.8 g/10 min, determined according to ISO 1133 at a temperature of 190°C and a load of 2.16 kg.

The polyethylene composition is preferably produced by mixing the multimodal high density polyethylene (A) and second high density polyethylene (B) and optionally the further components as described above. These components can be mixed prior to the preparation of the film e.g. by melt mixing or compounding so that the polyethylene composition is obtained and can be stored before film preparation. The components can also be mixed during the preparation of the film, e.g. by adding the components in the same or different hoppers into the extruder of the film production line.

The melt mixing or compounding device may be e.g. any conventionally used mixer or extruder, such as a twin screw extruder. As an example of an extruder for the present compounding step may be those supplied by Japan Steel works, Kobe Steel, Farrel-Pomini or Coperion, e.g. a ZSK extruder.

Multimodal high density polyethylene (A)

The multimodal high density polyethylene (A) may be a homopolymer or a copolymer, but is preferably an ethylene copolymer.

The comonomer contribution preferably is up to 10 % by mol, more preferably up to 5 % by mol. Ideally however there are very low levels of comonomer present in the polymers of the present invention such as 0.1 to 2.0 mol%, e.g. 0.1 to 1.0 mol%.

The other copolymerizable monomer or monomers are preferably C3-12, especially C3-10, alpha olefin comonomers, particularly singly or multiply ethylenically unsaturated comonomers, in particular C3-10-alpha olefins such as propene, 1-butene, 1-hexene, 1-octene, and 4-methyl-pent-1-ene. The use of 1-hexene, 1-octene and 1-butene, or mixtures thereof, is particularly preferred, especially 1-hexene and 1-butene, most preferably 1-butene. Ideally there is only one comonomer present.

The multimodal high density polyethylene (A) is multimodal and therefore comprises at least two components. The multimodal high density polyethylene (A) is preferably bimodal.

The multimodal high density polyethylene (A) comprises at least two polyethylene fractions (A-1) and (A-2), wherein the first polyethylene fraction (A-1) has a lower molecular weight than the second polyethylene fraction (A-2).

Usually, a polyethylene comprising at least two polyethylene fractions, which have been produced under different polymerization conditions resulting in different (weight average) molecular weights and molecular weight distributions for the fractions, is referred to as "multimodal". The prefix "multi" relates to the number of different polymer fractions the composition is consisting of. The polyethylene may also be multimodal with respect to comonomer content.

The form of the molecular weight distribution curve, i.e. the appearance of the graph of the polymer weight fraction as a function of its molecular weight, of such a multimodal polyethylene will show two or more maxima or at least be distinctly broadened in comparison with the curves for the individual fractions.

For example, if a polymer is produced in a sequential multistage process, utilising reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions are superimposed into the molecular weight distribution curve for the total resulting polymer product, usually yielding a curve with two or more distinct maxima.

The multimodal high density polyethylene (A) preferably is bimodal, i.e. the high density polyethylene (A) consists of the first polyethylene fraction (A-1) and the second polyethylene fraction (A-2).

The multimodal high density polyethylene (A) has a density of 945 to 970 kg/m$^3$. Preferable ranges for the density are from 950 to 965 kg/m$^3$, preferably from 953 to 963 kg/m$^3$, more preferably from 955 to 960 kg/m$^3$, measured according to ISO 1183.

The multimodal high density polyethylene (A) has a melt flow rate MFR$_2$ of 0.05 to 4.0 g/10 min. Preferable ranges for the MFR$_2$ are from 0.1 to 3.0 g/10 min, more preferably from 0.2 to 2.0 g/10 min, still more preferably from 0.5 to 1.8 g/10 min, determined according to ISO 1133 at a temperature of 190°C and a load of 2.16 kg.

The high density polyethylene (A) preferably has a melt flow rate MFR$_{21}$ of 15 to 75 g/10min, more preferably 20 to 65 g/10 min, still more preferably 30 to 55 g/10 min, determined according to ISO 1133 at a temperature of 190°C and a load of 21.6 kg.

The high density polyethylene (A) preferably has a Flow Rate Ratio (FRR) of the MFR$_{21}$/MFR$_2$ of from 35 to 85, preferably from 45 to 75, still more preferably from 50 to 65.

The high density polyethylene (A) preferably has a melting temperature Tm of from 125 to 150°C, more preferably from 126 to 145°C, still more preferably from 128 to 138°C.

The high density polyethylene (A) preferably has a crystallization temperature Tc of from 105 to 130°C, more preferably from 110 to 127°C, still more preferably from 115 to 125°C.

The high density polyethylene (A) preferably has a melting enthalpy Hm of from 170 to 250 J/g, more preferably from 185 to 240 J/g, still more preferably from 200 to 225 J/g.

The high density polyethylene (A) preferably has a weight average molecular weight Mw of from 115000 to 140000 g/mol, more preferably from 120000 to 135000 g/mol, still more preferably from 125000 to 132000 g/mol.

The high density polyethylene (A) preferably has a z average molecular weight Mz of from 600000 to 750000 g/mol, more preferably from 625000 to 735000 g/mol, still more preferably from 650000 to 725000 g/mol.

The high density polyethylene (A) preferably has a Mw/Mn ratio of from 10.0 to 22.5, more preferably from 11.0 to 20.0, still more preferably from 12.0 to 17.5.

The high density polyethylene (A) preferably has a Mz/Mw ratio of from 3.0 to 7.5, more preferably from 4.0 to 7.0, still more preferably from 5.0 to 6.0.

The high density polyethylene (A) comprises at least a first polyethylene fraction (A-1) and a second polyethylene fraction (A-2). In one particularly preferable embodiment, the high density polyethylene (A) consists of fractions (A-1) and (A-2).

The weight ratio of fraction (A-1) to fraction (A-2) in the composition is in the range 40:60 to 60:40, more preferably 43:57 to 55:45, still more preferably 45:55 to 50:50.

The first polyethylene fraction (A-1) is preferably present in the high density polyethylene (A) in an amount of from 40 to 60 wt%, preferably from 43 to 55 wt% and more preferably from 45 to 50 wt%, based on the total weight of the high density polyethylene (A).

The second polyethylene fraction (A-2) is present in the high density polyethylene (A) in an amount of from 40 to 60 wt%, preferably from 45 to 57 wt% and more preferably from 50 to 55 wt%, based on the total weight of the high density polyethylene (A).

In a particularly preferred embodiment, the weight amounts of fractions (A-1) and (A-2) add up to 100 %.

Each fraction (A-1) and fraction (A-2) may be an ethylene homopolymer or an ethylene copolymer. By ethylene homopolymer is meant a polymer comprising at least 97 mol% (such as at least 98 mol%, especially at least 99.5 mol%) ethylene monomer units. The term "ethylene copolymer" is defined above. Most preferably, fraction (A-1) is an ethylene homopolymer and fraction (A-2) is an ethylene copolymer.

The high density polyethylene (A) is produced in a multistage process wherein fractions (A-1) and (A-2) are produced in subsequent stages. In such a case, the properties of the fractions produced in the second step (or further steps) of the multistage process can either be inferred from polymers which are separately produced in a single stage by applying identical polymerization conditions (e.g. identical temperature, partial pressures of the reactants/diluents, suspension medium, reaction time) with regard to the stage of the multistage process in which the fraction is produced, and by using a catalyst on which no previously produced polymer is present. Alternatively, the properties of the fractions produced in a higher stage of the multistage process may also be calculated, e.g. in accordance with B. Hagström, Conference on Polymer Processing (The Polymer Processing Society), Extended Abstracts and Final Programme, Gothenburg, August 19 to 21, 1997, 4:13. Thus, although not directly measurable on the multistage process products, the properties of the fractions produced in higher stages of such a multistage process can be determined by applying either or both of the above methods. The skilled person will be able to select the appropriate method.

High density polyethylenes produced in a multistage process are also designated as "*in-situ*" blends. The resulting end product consists of an intimate mixture of the polymers from the two or more reactors, the different molecular-weight-distribution curves of these polymers together forming a molecular-weight-distribution curve having a broad maximum or two or more maxima, i.e. the end product is a multimodal polymer mixture

The first polyethylene fraction (A-1) has an MFR$_2$ of 50 to 600 g/10min, preferably from 150 to 500 g/10 min, more preferably from 250 to 400 g/10 min, determined according to ISO 1133 at a temperature of 190°C and a load of 2.16 kg.

The first polyethylene fraction (A-1) has a density of 955 to 980 kg/m$^3$, preferably from 960 to 975 kg/m$^3$, more preferably from 965 to 972, determined according to ISO 1183.

The first polyethylene fraction (A-1) can be an ethylene homopolymer or copolymer. Preferably, Fraction (A-1) is an ethylene homopolymer.

The second polyethylene fraction (A-2) has a melt flow rate MFR$_2$ of from 0.00001 to 1.0 g/10 min, preferably from 0.0001 to 0.5 g/10 min, more preferably from 0.0005 to 0.1 g/10 min, determined according to ISO 1133 at a temperature of 190°C and a load of 2.16 kg.

The second polyethylene fraction (A-2) has a density of 925 to 970 kg/m$^3$, preferably from 930 to 960 kg/m$^3$, more preferably from 935 to 950 kg/m$^3$, determined according to ISO 1183.

The second polyethylene fraction (A-2) can be an ethylene homopolymer or copolymer. The second polyethylene fraction (A-2) is preferably a copolymer. Preferred ethylene copolymers employ alpha-olefins (e.g. C3-12 alpha-olefins, preferably C4-C8 alpha-olefins) as comonomers. Examples of suitable alpha-olefins include 1-butene, 1-hexene and 1-octene. 1-butene is an especially preferred comonomer.

Preparation of Multimodal HDPE

The multimodal high density polyethylene (A) may be produced by polymerization using conditions which create a multimodal (e.g. bimodal) polymer product ideally using a Ziegler Natta catalyst system. Typically, a two or more stage, i.e. multistage, polymerization process is used with different process conditions in the different stages or zones (e.g. different temperatures, pressures, polymerization media, hydrogen partial pressures, etc). Preferably, the multimodal (e.g. bimodal) composition is produced by a multistage polymerization, e.g. using a series of reactors, with optional comonomer addition preferably in only the reactor(s) used for production of the higher/highest molecular weight component(s). A multistage process is defined to be a polymerization process in which a polymer comprising two or more fractions is produced by producing each or at least two polymer fraction(s) in a separate reaction stage, usually with different reaction conditions in each stage, in the presence of the reaction product of the previous stage which comprises a polymerization catalyst. The polymerization reactions used in each stage may involve conventional ethylene homopolymerization or copolymerization reactions, e.g. gas-phase, slurry phase, liquid phase polymerizations, using conventional reactors, e.g. loop reactors, gas phase reactors, batch reactors etc. (see for example WO97/44371 and WO96/18662).

Preferably, the multimodal high density polyethylene (A) is a bimodal high density polyethylene (A) prepared in a two-stage polymerization process.

The first polymerization stage produces an ethylene homopolymer or an ethylene copolymer, typically an ethylene homopolymer, which is subsequently fed to the second polymerization stage. The second polymerization stage can produce a further ethylene homopolymer, or an ethylene copolymer, preferably an ethylene copolymer.

The first polymerization stage is preferably a slurry polymerization step.

The slurry polymerization usually takes place in an inert diluent, typically a hydrocarbon diluent such as methane, ethane, propane, n-butane, isobutane, pentanes, hexanes, heptanes, octanes etc., or their mixtures. Preferably the diluent is a low-boiling hydrocarbon having from 1 to 4 carbon atoms or a mixture of such hydrocarbons. An especially preferred diluent is propane, possibly containing minor amounts of methane, ethane and/or butane.

The ethylene content in the fluid phase of the slurry may be from 1 to 50 % by mole, preferably from 2 to 20 % by mole and in particular from 2 to 10 % by mole. The benefit of having a high ethylene concentration is that the productivity of the catalyst is increased but the drawback is that more ethylene then needs to be recycled than if the concentration was lower.

The temperature in the first polymerization stage is typically from 60 to 100 °C, preferably from 70 to 90 °C. An excessively high temperature should be avoided to prevent partial dissolution of the polymer into the diluent and the fouling of the reactor. The pressure is generally from 1 to 150 bar, preferably from 40 to 80 bar.

The slurry polymerization may be conducted in any known reactor used for slurry polymerization. Such reactors include a continuous stirred tank reactor and a loop reactor. It is especially preferred to conduct the slurry polymerization in a loop reactor. In such reactors the slurry is circulated with a high velocity along a closed pipe by using a circulation pump. Loop reactors are generally known in the art and examples are given, for instance, in US-A-4582816, US-A-3405109, US-A-3324093, EP-A-479186 and US-A-5391654. It is thus preferred to conduct the first polymerization stage as a slurry polymerization in a loop reactor. The slurry may be withdrawn from the reactor either continuously or intermittently. A preferred way of intermittent withdrawal is the use of settling legs where slurry is allowed to concentrate before withdrawing a batch of the concentrated slurry from the reactor. The use of settling legs is disclosed, among others, in US-A-3374211, US-A-3242150 and EP-A-1310295. Continuous withdrawal is disclosed, among others, in EP-A-891990, EP-A-1415999, EP-A-1591460 and WO-A-2007/025640. The continuous withdrawal is advantageously combined with a suitable concentration method, as disclosed in EP-A-1310295 and EP-A-1591460. It is preferred to withdraw the slurry from the first polymerization stage continuously.

Hydrogen is typically introduced into the first polymerization stage for controlling the $MFR_2$ of the resultant polymer. The amount of hydrogen needed to reach the desired MFR depends on the catalyst used and the polymerization conditions. The desired polymer properties may be obtained in slurry polymerization in a loop reactor with the molar ratio of hydrogen to ethylene of from 100 to 1000 mol/kmol (or mol/1000 mol) and preferably of from 200 to 800 mol/kmol.

The average residence time in the first polymerization stage is typically from 20 to 120 minutes, preferably from 30 to 80 minutes. As it is well known in the art the average residence time $\tau$ can be calculated from Equation 1 below:

Equation 1: Residence Time

$$\tau = \frac{V_R}{Q_o}$$

Where $V_R$ is the volume of the reaction space (in case of a loop reactor, the volume of the reactor, in case of the fluidized bed reactor, the volume of the fluidized bed) and $Q_o$ is the volumetric flow rate of the product stream (including the polymer product and the fluid reaction mixture).

The production rate is suitably controlled with the catalyst feed rate. It is also possible to influence the production rate by suitable selection of the monomer concentration. The desired monomer concentration can then be achieved by suitably adjusting the ethylene feed rate.

In the second polymerization stage, ethylene is polymerized, optionally together with at least one alpha-olefin comonomer, in the presence of the catalyst and the ethylene polymer produced in the first polymerization stage. It will thus be appreciated that the second polymerization stage generates an ethylene polymer, which combines with the ethylene polymer from the first polymerization stage, to form the multimodal high density polyethylene (A). Preferable comonomers are discussed hereinbefore, however it is noted that it is particularly preferable if the at least one alpha-olefin is butene.

The second polymerization stage is preferably a gas phase polymerization step, i.e. carried out in a gas-phase reactor. Any suitable gas phase reactor known in the art may be used, such as a fluidised bed gas phase reactor.

For gas phase reactors, the reaction temperature used will generally be in the range 60 to 115°C (e.g. 70 to 110°C), the reactor pressure will generally be in the range 10 to 25 bar, and the residence time will generally be 1 to 8 hours. The gas used will commonly be a nonreactive gas such as nitrogen or low boiling point hydrocarbons such as propane together with monomer (e.g. ethylene).

A chain transfer agent (e.g. hydrogen) is typically added to the second polymerization stage, preferably in amounts of 50 to 500 mol of $H_2$/kmol ethylene.

The split between the first polymerization stage and the second polymerization stage (i.e. between the slurry polymerization and the gas phase polymerization) is typically 40:60 to 60:40, more preferably 43:57 to 55:45, most preferably 45:55 to 50:50.

Prepolymerization

The polymerization steps discussed above may be preceded by a prepolymerization step. The purpose of the prepolymerization is to polymerize a small amount of polymer onto the catalyst at a low temperature and/or a low monomer concentration. By prepolymerization it is possible to improve the performance of the catalyst in slurry and/or modify the properties of the final polymer. The prepolymerization step is conducted in slurry.

Thus, the prepolymerization step may be conducted in a loop reactor. The prepolymerization is then preferably conducted in an inert diluent, typically a hydrocarbon diluent such as methane, ethane, propane, n-butane, isobutane, pentanes, hexanes, heptanes, octanes etc., or their mixtures. Preferably the diluent is a low-boiling hydrocarbon having from 1 to 4 carbon atoms or a mixture of such hydrocarbons.

The temperature in the prepolymerization step is typically from 0 to 90 °C, preferably from 20 to 80 °C and more preferably from 55 to 75 °C.

The pressure is not critical and is typically from 1 to 150 bar, preferably from 40 to 80 bar. The amount of monomer is typically such that from 0.1 to 1000 grams of monomer per one gram of solid catalyst component is polymerized in the prepolymerization step. As the person skilled in the art knows, the catalyst particles recovered from a continuous prepolymerization reactor do not all contain the same amount of prepolymer. Instead, each particle has its own characteristic amount which depends on the residence time of that particle in the prepolymerization reactor. As some particles remain in the reactor for a relatively long time and some for a relatively short time, then also the amount of prepolymer on different particles is different and some individual particles may contain an amount of prepolymer which is outside the above limits. However, the average amount of prepolymer on the catalyst typically is within the limits specified above.

The molecular weight of the prepolymer may be controlled by hydrogen as it is known in the art. Further, antistatic additives may be used to prevent the particles from adhering to each other or the walls of the reactor, as disclosed in WO-A-96/19503 and WO-A-96/32420.

The catalyst components are preferably all introduced to the prepolymerization step when a prepolymerization step is present. However, where the solid catalyst component and the cocatalyst can be fed separately it is possible that only a part of the cocatalyst is introduced into the prepolymerization stage and the remaining part into subsequent polymerization stages. Also in such cases it is necessary to introduce so much cocatalyst into the prepolymerization stage that a sufficient polymerization reaction is obtained therein.

It is understood within the scope of the invention, that the amount of polymer produced in the prepolymerization typically lies within 1 - 5 wt% in respect to the final multimodal high density polyethylene (A).

Catalyst

The polymerization is typically conducted in the presence of a Ziegler-Natta polymerization catalyst. Suitable Ziegler-Natta (ZN) catalysts generally comprise at least a catalyst component formed from a transition metal compound of Group 4 to 6 of the Periodic Table (IUPAC, Nomenclature of Inorganic Chemistry, 1989), a metal compound of Group 1 to 3 of the Periodic Table (IUPAC), optionally a compound of group 13 of the Periodic Table (IUPAC), and optionally an internal organic compound, like an internal electron donor. A ZN catalyst may also comprise further catalyst component(s), such as a cocatalyst and optionally external additives.

Suitable ZN catalysts preferably contain a magnesium compound, an aluminium compound and a titanium compound supported on a particulate support.

The particulate support can be an inorganic oxide support, such as silica, alumina, titania, silica-alumina, silica-titania or a $MgCl_2$ based support. Preferably, the support is silica or a $MgCl_2$ based support.

Particularly preferred Ziegler-Natta catalysts are such as described in EP 1378528 A1.

If used, the magnesium compound preferably is a reaction product of a magnesium dialkyl and an alcohol. The alcohol is a linear or branched aliphatic monoalcohol. Preferably, the alcohol has from 6 to 16 carbon atoms. Branched alcohols are especially preferred, and 2-ethyl-1-hexanol is one example of the preferred alcohols. The magnesium dialkyl may be any compound of magnesium bonding to two alkyl groups, which may be the same or different. Butyl-octyl magnesium is one example of the preferred magnesium dialkyls.

The aluminium compound is a chlorine containing aluminium alkyl. Especially preferred compounds are aluminium alkyl dichlorides and aluminium alkyl sesquichlorides.

The transition metal compound of Group 4 to 6 is preferably a titanium or vanadium compound, more preferably a halogen containing titanium compound, most preferably chlorine containing titanium compound. An especially preferred titanium compound is titanium tetrachloride.

The catalyst can be prepared by sequentially contacting the carrier with the above mentioned compounds, as described in EP 688794 or WO 99/51646. Alternatively, it can be prepared by first preparing a solution from the components and then contacting the solution with a carrier, as described in WO 01/55230.

Another group of suitable ZN catalysts contain a titanium compound together with a magnesium halide compound acting as a support. Thus, the catalyst contains a titanium compound and optionally a Group 13 compound for example an aluminium compound on a magnesium dihalide, like magnesium dichloride. Such catalysts are disclosed, for instance, in WO 2005/118655, EP 810235, WO 2014/096296 and WO 2016/097193.

Suitable activators are group 13 metal compounds, typically group 13 alkyl compounds and especially aluminium alkyl compounds, where the alkyl group contains 1 to 16 C-atoms. These compounds include trialkyl aluminium compounds, such as trimethylaluminium, triethylaluminium, tri-isobutylaluminium, trihexylaluminium and tri-n-octylaluminium, alkyl aluminium halides, such as ethylaluminium dichloride, diethylaluminium chloride, ethylaluminium sesquichloride, dimethylaluminium chloride and the like. Especially preferred activators are trialkylaluminiums, of which triethylaluminium, trimethylaluminium and tri-isobutylaluminium are particularly used.

The amount in which the activator is used depends on the specific catalyst and activator. Typically triethylaluminium is used in such amount that the molar ratio of aluminium to the transition metal, like Al/Ti, is from 1 to 1000, preferably from 3 to 100 and in particular from about 5 to about 30 mol/mol.

An optional internal organic compound may be chosen from the following classes: ethers, esters, amines, ketones, alcohols, anhydrides or nitriles or mixtures thereof. Preferably, the optional internal organic compound is selected from ethers and esters, most preferably from ethers. Preferred ethers are of 2 to 20 carbon-atoms and especially mono, di or multi cyclic saturated or unsaturated ethers comprising 3 to 6 ring atoms. Typical cyclic ethers suitable in the present invention, if used, are tetrahydrofuran (THF), substituted THF, like 2-methyl THF, di-cyclic ethers, like 2,2-di(2-tetrahydrofuryl)propane, 2,2-di-(2-furan)-propane, or isomers or mixtures thereof. Internal organic compounds are also often called as internal electron donors.

Second high density polyethylene (B)

The second high density polyethylene (B) has a density of from 955 to 980 kg/m$^3$, preferably from 957 to 970 kg/m$^3$, more preferably from 959 to 967 kg/m$^3$, determined according to ISO 1183.

The second high density polyethylene (B) has a melt flow rate MFR$_2$ of from 5.0 to 100 g/10 min, preferably from 10.0 to 75.0 g/10 min, more preferably from 15.0 to 60.0 g/lOmin, still more preferably from 20.0 to 50.0 g/lOmin, determined according to ISO 1133 at a temperature of 190°C and a load of 2.16 kg.

It is preferred that the second high density polyethylene (B) has one or more, preferably all of the following properties:

- a weight average molecular weight Mw of from 30000 to 100000 g/mol, preferably from 40000 to 75000 g/mol, more preferably from 45000 to 60000 g/mol;
- a z average molecular weight Mz of from 175000 to 350000 g/mol, preferably from 200000 to 325000 g/mol, more preferably from 225000 to 300000 g/mol;
- a Mw/Mn ratio of from 2.5 to 8.5, preferably from 3.0 to 7.0, more preferably from 4.0 to 6.0; and/or
- a Mz/Mw ratio of from 2.5 to 8.5, preferably from 3.5 to 7.5, more preferably from 4.0 to 6.5.

The second high density polyethylene (B) may be a homopolymer or a copolymer, but is preferably an ethylene copolymer.

The comonomer contribution preferably is up to 10 % by mol, more preferably up to 5 % by mol. Ideally however there are very low levels of comonomer present in the polymers of the present invention such as 0.1 to 2.0 mol%, e.g. 0.1 to 1.0 mol%.

The other copolymerizable monomer or monomers are preferably C3-12, especially C3-10, alpha olefin comonomers, particularly singly or multiply ethylenically unsaturated comonomers, in particular C3-10-alpha olefins such as propene, 1-butene, 1-hexene, 1-octene, and 4-methyl-pent-1-ene. The use of 1-hexene, 1-octene and 1-butene, or mixtures thereof, is particularly preferred, especially 1-hexene and 1-butene, most preferably 1-butene. Ideally there is only one comonomer present.

The second high density polyethylene (B) preferably is unimodal.

The second high density polyethylene (B) can be produced in a single polymerization stage or a multistage polymerization process as outlined above for the multimodal high density polyethylene (A).

In the case of a unimodal high density polyethylene the same polymerization conditions must be used in all polymerization stages of a multistage polymerization process.

Suitable polymerization catalysts are e.g. Ziegler Natta catalysts or metallocene catalyst. For obtaining broader Mw/Mn ratios, thereby Ziegler-Natta catalysts are preferred.

Commercially available high density polyethylenes, meeting the properties as described above or below can also be used as second high density polyethylene (B).

Use

Further, the present invention relates to the use of a polyethylene composition having a density of from 945.0 to 970.0 kg/m$^3$, determined according to ISO 1183, and a melt flow rate MFR$_2$ of from 0.5 to 7.5 g/10 min, determined according to ISO 1133 at a temperature of 190°C and a load of 2.16 kg, wherein the polyethylene composition comprises

(A) from 70.0 to 92.0 wt%, based on the total weight of the polyethylene composition, of a multimodal high density polyethylene having a density of from 945 to 970 kg/m$^3$, determined according to ISO 1183, and a melt flow rate MFR$_2$ of 0.05 to 4.0 g/10 min, determined according to ISO 1133 at a temperature of 190°C and a load of 2.16 kg; wherein the multimodal high density polyethylene (A) comprises at least two polyethylene fractions (A-1) and (A-2)

(A-1) from 40 to 60 wt%, based on the total weight of the multimodal high density polyethylene (A), of a first polyethylene fraction having a density of from 955 to 980 kg/m$^3$, determined according to ISO 1183, and a melt flow rate MFR$_2$ of 50 to 600 g/10 min, determined according to ISO 1133 at a temperature of 190°C and a load of 2.16 kg; and

(A-2) from 40 to 60 wt%, based on the total weight of the multimodal high density polyethylene (A), of second polyethylene fraction having a density of from 925 to 970 kg/m$^3$, determined according to ISO 1183, and a melt flow rate MFR$_2$ of 0.00001 to 1.0 g/10 min, determined according to ISO 1133 at a temperature of 190°C and a load of 2.16 kg;

(B) from 8.0 to 30.0 wt%, based on the total weight of the polyethylene composition, of a second high density polyethylene having a density of from 955 to 980 kg/m³, determined according to ISO 1183, and a melt flow rate $MFR_2$ of from 5.0 to 100 g/10 min, determined according to ISO 1133 at a temperature of 190°C and a load of 2.16 kg for the production of a monoaxially oriented film.

All embodiments and definitions of the polyethylene composition and the film as described above or below preferably also apply to the use of the invention.

The present invention will now be described in further detail by the examples provided below: The following definitions of terms and determination methods apply for the above general description of the invention as well as to the below examples unless otherwise defined.

**Determination methods**

Melt Flow Rate (MFR)

The melt flow rates were measured at 190 °C with a load of 2.16 kg ($MFR_2$) or 21.6 kg ($MFR_{21}$) according to ISO 1133.

*Calculation of $MFR_2$ of Fractions (A-1) and (A-2)*

$$logA = x \cdot logB + (1 - x) \cdot logC$$

$$C = 10 \wedge \frac{(logA - x.logB)}{(1-x)}$$

B = $MFR_2$ of Fraction (A-1)
C = $MFR_2$ of Fraction (A-2)
A = final $MFR_2$ (mixture) of multimodal high density polyethylene (A)
X = weight fraction of Fraction (A)

Flow Rate Ratio (FRR21/2))

FRR is determined as the ratio between the $MFR_{21}$ and the $MFR_2$.

GPC

Molecular weight averages (Mz, Mw and Mn), Molecular weight distribution (MWD) and its broadness, described by polydispersity index, PDI= Mw/Mn (wherein Mn is the number average molecular weight and Mw is the weight average molecular weight) were determined by Gel Permeation Chromatography (GPC) according to ISO 16014-1:2003, ISO 16014-2:2003, ISO 16014-4:2003 and ASTM D 6474-12 using the following formulas:

$$M_n = \frac{\sum_{i=1}^{N} A_i}{\sum_{i=1}^{N} (A_i/M_i)} \quad (1)$$

$$M_w = \frac{\sum_{i=1}^{N} (A_i \times M_i)}{\sum_{i=1}^{N} A_i} \quad (2)$$

$$M_z = \frac{\sum_{i=1}^{N} (A_i \times M_i^2)}{\sum_{i=1}^{N} (A_i \times M_i)} \quad (3)$$

For a constant elution volume interval $\Delta V_i$, where $A_i$, and $M_i$ are the chromatographic peak slice area and polyolefin molecular weight (MW), respectively associated with the elution volume, V;, where N is equal to the number of data points obtained from the chromatogram between the integration limits.

A high temperature GPC instrument, equipped with either infrared (IR) detector (IR4 or IR5 from PolymerChar (Valencia, Spain), equipped with 3 x Agilent-PLgel Olexis and 1× Agilent-PLgel Olexis Guard columns was used. As the solvent and mobile phase 1,2,4-trichlorobenzene (TCB) stabilized with 250 mg/L 2,6-Di tert butyl-4-methyl-phenol) was used. The chromatographic system was operated at 160 °C and at a constant flow rate of 1 mL/min. 200 μL of sample solution was injected per analysis. Data collection was performed using either Agilent Cirrus software version 3.3 or PolymerChar GPC-IR control software. The column set was calibrated using universal calibration (according to ISO 16014-2:2003) with 19 narrow MWD polystyrene (PS) standards in the range of 0,5 kg/mol to 11 500 kg/mol. The PS standards were dissolved at room temperature over several hours. The conversion of the polystyrene peak molecular weight to polyolefin molecular weights is accomplished by using the Mark Houwink equation and the following Mark Houwink constants:

$$K_{PS} = 19 \text{ x } 10^{-3} \text{ mL/g}, \alpha_{PS} = 0.655$$

$$K_{PE} = 39 \text{ x } 10^{-3} \text{ mL/g}, \alpha_{PE} = 0.725$$

$$K_{PP} = 19 \text{ x } 10^{-3} \text{ mL/g}, \alpha_{PP} = 0.725$$

A third order polynomial fit was used to fit the calibration data.

All samples were prepared in the concentration range of 0,5 -1 mg/ml and dissolved at 160 °C for 2.5 hours for PP or 3 hours for PE under continuous gentle shaking.

Comonomer contents

• Quantification of microstructure by NMR spectroscopy

Quantitative nuclear-magnetic resonance (NMR) spectroscopy was used to quantify the comonomer content of the polymers.

Quantitative $^{13}$C{$^1$H} NMR spectra recorded in the molten-state using a Bruker Advance III 500 NMR spectrometer operating at 500.13 and 125.76 MHz for $^1$H and $^{13}$C respectively. All spectra were recorded using a $^{13}$C optimised 7 mm magic-angle spinning (MAS) probehead at 150°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification. {klimke06, parkinson07, castignolles09} Standard single-pulse excitation was employed utilising the NOE at short recycle delays{pollard04, klimke06} and the RS-HEPT decoupling scheme {fillip05 ,griffin07}. A total of 1024 (1k) transients were acquired per spectra.

Quantitative $^{13}$C{$^1$H} NMR spectra were processed, integrated and relevant quantitative properties determined from the integrals. All chemical shifts are internally referenced to the bulk methylene signal (δ+) at 30.00 ppm.

The amount of ethylene was quantified using the integral of the methylene (δ+) sites at 30.00 ppm accounting for the number of reporting sites per monomer:

$$E = I_{\delta+} / 2$$

the presence of isolated comonomer units is corrected for based on the number of isolated comonomer units present:

$$E\text{total} = E + (3*B + 2*H) / 2$$

where B and H are defined for their respective comonomers. Correction for consecutive and non-consecutive commoner incorporation, when present, is undertaken in a similar way. Characteristic signals corresponding to the incorporation of 1-butene were observed and the comonomer fraction calculated as the fraction of 1-butene in the polymer with respect to all monomer in the polymer:

$$fBtotal = (Btotal / (Etotal + Btotal + Htotal)$$

The amount isolated 1-butene incorporated in EEBEE sequences was quantified using the integral of the *B2 sites at 38.3 ppm accounting for the number of reporting sites per comonomer:

$$B = I_{*B2}$$

The amount consecutively incorporated 1-butene in EEBBEE sequences was quantified using the integral of the $\alpha\alpha$B2B2 site at 39.4 ppm accounting for the number of reporting sites per comonomer:

$$BB = 2 * I\alpha\alpha B2B2$$

The amount non consecutively incorporated 1-butene in EEBEBEE sequences was quantified using the integral of the $\beta\beta$B2B2 site at 24.7 ppm accounting for the number of reporting sites per comonomer:

$$BEB = 2 * I\beta\beta B2B2$$

Due to the overlap of the *B2 and *βB2B2 sites of isolated (EEBEE) and non-consecutivly incorporated (EEBEBEE) 1-butene respectively the total amount of isolated 1-butene incorporation is corrected based on the amount of non-consecutive 1-butene present:

$$B = I_{*B2} - 2 * I_{\beta\beta B2B2}$$

The total 1-butene content was calculated based on the sum of isolated, consecutive and non consecutively incorporated 1-butene:

$$Btotal = B + BB + BEB$$

The total mole fraction of 1-butene in the polymer was then calculated as:

$$fB = (Btotal / ( Etotal + Btotal + Htotal)$$

Characteristic signals corresponding to the incorporation of 1-hexene were observed and the comonomer fraction calculated as the fraction of 1-hexene in the polymer with respect to all monomer in the polymer:

$$fHtotal = (Htotal / (Etotal + Btotal + Htotal)$$

The amount isolated 1-hexene incorporated in EEHEE sequences was quantified using the integral of the *B4 sites at 39.9 ppm accounting for the number of reporting sites per comonomer:

$$H = I_{*B4}$$

The amount consecutively incorporated 1-hexene in EEHHEE sequences was quantified using the integral of the $\alpha\alpha$B4B4 site at 40.5 ppm accounting for the number of reporting sites per comonomer:

$$HH = 2 * I\alpha\alpha B4B4$$

The amount non consecutively incorporated 1-hexene in EEHEHEE sequences was quantified using the integral of the ββB4B4 site at 24.7 ppm accounting for the number of reporting sites per comonomer:

$$HEH = 2 * I\beta\beta B4B4$$

The total mole fraction of 1-hexene in the polymer was then calculated as:

$$fH = (Htotal / (Etotal + Btotal + Htotal))$$

The mole percent comonomer incorporation is calculated from the mole fraction:

$$B [mol\%] = 100 * fB$$

$$H [mol\%] = 100 * fH$$

The weight percent comonomer incorporation is calculated from the mole fraction:

$$B [wt\%] = 100 * ( fB * 56.11) / ( (fB * 56.11) + (fH * 84.16) + ((1-(fB + fH)) * 28.05) )$$

$$H [wt\%] = 100 * ( fH * 84.16 ) / ( (fB * 56.11) + (fH * 84.16) + ((1-(fB + fH)) * 28.05) )$$

References:

Klimke, K., Parkinson, M., Piel, C., Kaminsky, W., Spiess, H.W., Wilhelm, M., Macromol. Chem. Phys. 2006;207:382.
Parkinson, M., Klimke, K., Spiess, H.W., Wilhelm, M., Macromol. Chem. Phys. 2007;208:2128.
Pollard, M., Klimke, K., Graf, R., Spiess, H.W., Wilhelm, M., Sperber, O., Piel, C., Kaminsky, W., Macromolecules 2004;37:813.
Filip, X., Tripon, C., Filip, C., J. Mag. Resn. 2005, 176, 239
Griffin, J.M., Tripon, C., Samoson, A., Filip, C., and Brown, S.P., Mag. Res. in Chem. 2007 45, S1, S198
Castignolles, P., Graf, R., Parkinson, M., Wilhelm, M., Gaborieau, M., Polymer 50 (2009) 2373 Busico, V., Cipullo, R., Prog. Polym. Sci. 26 (2001) 443
Busico, V., Cipullo, R., Monaco, G., Vacatello, M., Segre, A.L., Macromoleucles 30 (1997) 6251
Zhou, Z., Kuemmerle, R., Qiu, X., Redwine, D., Cong, R., Taha, A., Baugh, D. Winniford, B., J. Mag. Reson. 187 (2007) 225
Busico, V., Carbonniere, P., Cipullo, R., Pellecchia, R., Severn, J., Talarico, G., Macromol. Rapid Commun. 2007, 28, 1128
Resconi, L., Cavallo, L., Fait, A., Piemontesi, F., Chem. Rev. 2000, 100, 1253

Density

The density was measured according to ISO 1183 and ISO1872-2 for sample preparation.

DSC Analysis

Melting temperature Tm and Crystallization temperature Tc were measured with a TA Instrument Q2000 differential scanning calorimetry (DSC) on 5 to 7 mg samples. DSC is run according to ISO 11357 / part 3 /method C2 in a heat / cool / heat cycle with a scan rate of 10 °C/min in the temperature range of -30 to +225°C. Crystallization temperature was determined from the cooling step, while melting temperature (Tm) and melting enthalpy (Hm) are determined from the second heating step.

Tensile modulus

Tensile modulus was measured in machine and/or transverse direction according to ISO 527-3 on film samples with a thickness of 20 and 24 $\mu$m produced as indicated below and at a cross head speed of 1 mm/min for the modulus.

Optical properties

Haze and clarity as a measure for the optical appearance of the films was determined according to ASTM D1003 on film samples with a thickness of 20 and 24 $\mu$m produced as indicated below.

**Examples:**

Multimodal high density polyethylene (HDPE-A):

The multimodal high density polyethylene (HDPE-A) is a bimodal HDPE produced using a ZN catalyst (as disclosed in EP 2 994 506) in a pilot plant, with a configuration of prepolymerization - loop - gas phase reactor using the conditions as shown in Table 1 below, having $MFR_2$ 0.8 g/10 min, density 955.5 kg/m$^3$. It is pelletized with 500 ppm Irganox 1010 (supplied by BASF), 2000 ppm Irgafos 168 (supplied by BASF), 500 ppm calciumstearate (CEASIT FI, supplied by Baerlocher) in a twin screw extruder.

Table 1: Polymerization conditions and properties of the HDPE-A

|  | HDPE-A |
|---|---|
| **Prepolymerization** |  |
| Temp. (°C) | 70 |
| Press. (kPa) | 5700 |
| $H_2$ (g/h) | 5.0 |
| **Loop reactor** |  |
| Temp. (°C) | 95 |
| Press. (kPa) | 5500 |
| C2 conc. (mol-%) | 3.5 |
| $H_2$/C2 (mol/kmol) | 430.0 |
| Density | 970.0 |
| split % | 49.0 |
| $MFR_2$ (g/10 min) | 350.00 |
| **GPR** |  |
| Temp. (°C) | 85 |
| Press. (kPa) | 2000 |
| H2/C2 (mol/kmol) | 110 |
| C4/C2 (mol/kmol) | 25.0 |
| split % | 51.0 |
| Density (kg/m$^3$) | 955.5 |
| $MFR_2$ (g/10 min) | 0.80 |
| **Pellet** |  |
| Density (kg/m$^3$) | 955.5 |
| $MFR_2$ (g/10 min) | 0.8 |

(continued)

| Pellet | |
|---|---|
| MFR$_{21}$ (g/10 min) | 47.4 |
| MFR$_{21}$/MFR$_2$ | 59 |
| MFR$_2$ in GPR (g/10 min) | 0.002 |
| Density in GPR (kg/m$^3$) | 941.6 |

Second high density polyethylene (HDPE-B)

The second high density polyethylene (HDPE-B) is produced in single gas phase reactor, with a Ziegler-Natta catalyst, details of which are described in EP1780225A1. The polymerization condition is adjusted by man skilled in the art. The typical condition is in Table 2. It is pelletized with 1000 ppm of Irganox B225 (supplied by BASF), 700 ppm calciumstearate (CEASIT FI, supplied by Baerlocher) in a twin screw extruder. HDPE-B has a melt flow rate MFR$_2$ of 30 g/10 min, a density of 960 kg/m$^3$. It has a Mz of 255000 g/mol, a Mw of 52575 g/mol, and a Mw/Mn ratio of 4.96.

Table 2. Polymerization details of HDPE-B

| | Unit | HDPE-B |
|---|---|---|
| **Reactor pressure** | bar | 21 |
| **Temperature** | °C | 105 |
| **Ethylene partial pressure** | bar | 7 |
| **Butene concentration** | C4/C2*100 | 2.4 |
| **Hydrogen concentration** | H2/C2*100 | 50 |

Film preparation

HDPE-A and HDPE-B in the amounts given in Table 3 for comparative example CE1 and inventive examples IE1 and IE2 were compounded in a mixer.

Blown film sheets were produced from these compounds in W&H blown film line, with a melt temperature of about 220°C and BUR 1:3. The sheets had a thickness of 120 μm. Thereby, the compositions of inventive examples IE1 and IE2 showed a better processability compared to CE1 during the production of the sheet, which can be seen at a lower die pressure and lower melt temperatures. The bubble in the blow film line during preparation of the sheets for IE1 and IE2 was stable under these conditions. Due to the lower die pressure e.g. a higher production rate is possible.

The sheets were then stretched in machine direction on a Alpine MDO 20 lab scale line. The stretching conditions were optimized as well known to a person skilled in the art. The typical stretching temperature was 122°C and used for all compositions. The target stretch ratio was 6:1. It was found, that comparative example CE1 showed an inferior stretch behaviour so that a stretch ratio of 6:1 was not possible. Therefore, the sheets of CE1 and IE1 were additionally stretched with a stretch ratio of 5:1.

The production conditions and properties of the MDO-films are also shown in Table 3. It can be seen when comparing the 24 μm MDO films of examples IE1 and CE1 that the MDO film of IE1 shows improved mechanical properties (TM-MD and TM-TD) and improved optical properties (haze and clarity). Due to the better processing conditions a wider process window for obtaining different properties e.g. by changes in blend ratios and stretch ratios is obtained for the MDO films according to the present invention.

Table 3: Composition, film production conditions and properties of the MDO-films of examples IE1, IE2 and CE1

| | | CE1 | IE1 | IE2 |
|---|---|---|---|---|
| **Composition** | | | | |
| HDPE-A | wt% | 93 | 85 | 80 |
| HDPE-B | wt% | 7 | 15 | 20 |

(continued)

|  | | CE1 | IE1 | IE2 |
|---|---|---|---|---|
| **Composition** | | | | |
| Density of composition | kg/m$^3$ | 955.8 | 956.2 | 956.4 |
| MFR$_2$ of composition | g/10min | 1.0 | 1.4 | 1.7 |
| **Conditions** | | | | |
| Melt Temperature | °C | 223 | 220 | 218 |
| Die Pressure | Bar | 175 | 160 | 148 |
| Sheet Thickness | μm | 120 | 120 | 120 |
| **Film properties** | | | | |
| MDO ratio | | 5:1 | 5:1 | n.m. |
| Film thickness | μm | 24 | 24 | |
| TM-MD | MPa | 2056 | 2423 | |
| TM-TD | MPa | 2457 | 2346 | |
| (TM-MD-TM-TD) / TM-MD | % | -19.5 | 3.2 | |
| Haze | % | 21.7 | 19.4 | |
| TM-MD/haze | | 94.7 | 124.9 | |
| Clarity | % | 88.3 | 91.0 | |
| MDO ratio | | n.m. | 6:1 | 6:1 |
| Film thickness | μm | | 20 | 20 |
| TM-MD | MPa | | 2275 | 2501 |
| TM-TD | MPa | | 2496 | 2567 |
| (TM-MD-TM-TD) / TM-MD | % | | -9.7 | -2.4 |
| Haze | % | | 13.6 | 11.1 |
| TM-MD/haze | MPa/% | | 167.2 | 225.3 |
| Clarity | % | | 94.6 | 95.9 |
| n.m. = not measured | | | | |

**Claims**

1. A monoaxially oriented film comprising a polyethylene composition having a density of from 945.0 to 970.0 kg/m$^3$, determined according to ISO 1183, and a melt flow rate MFR$_2$ of from 0.5 to 7.5 g/10 min, determined according to ISO 1133 at a temperature of 190°C and a load of 2.16 kg, wherein the polyethylene composition comprises

   (A) from 70.0 to 92.0 wt%, based on the total weight of the polyethylene composition, of a multimodal high density polyethylene having a density of from 945 to 970 kg/m$^3$, determined according to ISO 1183, and a melt flow rate MFR$_2$ of 0.05 to 4.0 g/10 min, determined according to ISO 1133 at a temperature of 190°C and a load of 2.16 kg;
   wherein the multimodal high density polyethylene (A) comprises at least two polyethylene fractions (A-1) and (A-2)

      (A-1) from 40 to 60 wt%, based on the total weight of the multimodal high density polyethylene (A), of a first polyethylene fraction having a density of from 955 to 980 kg/m$^3$, determined according to ISO 1183, and a melt flow rate MFR$_2$ of 50 to 600 g/10 min, determined according to ISO 1133 at a temperature of 190°C and a load of 2.16 kg; and

(A-2) from 40 to 60 wt%, based on the total weight of the multimodal high density polyethylene (A), of second polyethylene fraction having a density of from 925 to 970 $kg/m^3$, determined according to ISO 1183, and a melt flow rate $MFR_2$ of 0.00001 to 1.0 g/10 min, determined according to ISO 1133 at a temperature of 190°C and a load of 2.16 kg;

(B) from 8.0 to 30.0 wt%, based on the total weight of the polyethylene composition, of a second high density polyethylene having a density of from 955 to 980 $kg/m^3$, determined according to ISO 1183, and a melt flow rate $MFR_2$ of from 5.0 to 100 g/10 min, determined according to ISO 1133 at a temperature of 190°C and a load of 2.16 kg.

2. The monoaxially oriented film according to claim 1 being oriented only in machine direction (MDO film).

3. The monoaxially oriented film according to claim 1 or 2 wherein the stretch ratio for orienting the film in one direction is from 2:1 to 10:1, preferably from 4:1 to 8:1, more preferably from 5:1 to 7:1.

4. The monoaxially oriented film according to any one of the preceding claims being a monolayer film or a layer of a multilayer film.

5. The monoaxially oriented film according to any one of the preceding claims being prepared as cast film or a blown film, which is stretched in one direction.

6. The monoaxially oriented film according to any one of the preceding claims having a thickness of from 5 to 100 $\mu$m, preferably from 10 to 75 $\mu$m, more preferably from 15 to 50 $\mu$m.

7. The monoaxially oriented film according to any one of the preceding claims having one or more, preferably all of the following properties:

   • a haze of from 1.0 to 20.0 %, preferably from 1.0 to 17.5 %, more preferably from 2.5 to 15.0%, determined according to ASTM D1003 on a MDO blown film sample (stretch ratio 6:1) having a thickness of 20 $\mu$m;
   • a clarity of from 90.0 to 99.0 %, preferably from 92.5 to 99.0 %, more preferably from 94.0 to 98.0%, determined according to ASTM D1003 on a MDO blown film sample (stretch ratio 6:1) having a thickness of 20 $\mu$m;
   • a tensile modulus in machine direction (TM-MD) of from 2000 to 3000 MPa, preferably from 2100 to 3000 MPa, more preferably from 2200 to 2800 MPa, determined according to ISO 527-3 on a MDO blown film sample (stretch ratio 6:1) having a thickness of 20 $\mu$m;
   • a tensile modulus in traverse direction (TM-TD) of from 2000 to 3000 MPa, preferably from 2200 to 3000 MPa, more preferably from 2400 to 2800 MPa, determined according to ISO 527-3 on a MDO blown film sample (stretch ratio 6:1) having a thickness of 20 $\mu$m; and/or
   • a ratio of tensile modulus in machine direction (TM-MD) to haze (TM-MD/haze) of from 100 to 300 [MPa/%], preferably from 125 to 275 [MPa/%], more preferably from 150 to 250 [MPa/%], determined on a MDO blown film sample (stretch ratio 6:1) having a thickness of 20 $\mu$m.

8. The monoaxially oriented film according to any one of the preceding claims wherein the multimodal high density polyethylene (A) has one or more, preferably all of the following properties:

   • a melt flow rate $MFR_{21}$ of from 15 to 75 g/10 min, preferably from 20 to 65 g/10 min, more preferably from 30 to 55 g/10 min, determined according to ISO 1133 at a temperature of 190°C and a load of 21.6 kg;
   • a flow rate ratio $FRR_{21/2}$, being the ratio of $MFR_{21}$ to $MFR_{21}$ of from 35 to 85, preferably from 45 to 75, more preferably from 50 to 65;
   • a melting temperature Tm of from 125 to 150°C, preferably from 126 to 145°C, more preferably from 128 to 138°C;
   • a crystallization temperature Tc of from 105 to 130°C, preferably from 110 to 127°C, more preferably from 115 to 125°C;
   • a melting enthalpy Hm of from 170 to 250 J/g, preferably from 185 to 240 J/g, more preferably from 200 to 225 J/g;
   • a weight average molecular weight Mw of from 115000 to 140000 g/mol, preferably from 120000 to 135000 g/mol, more preferably from 125000 to 132000 g/mol;
   • a z average molecular weight Mz of from 600000 to 750000 g/mol, preferably from 625000 to 735000 g/mol, more preferably from 650000 to 725000 g/mol;

• a Mw/Mn ratio of from 10.0 to 22.5, preferably from 11.0 to 20.0, more preferably from 12.0 to 17.5; and/or
• a Mz/Mw ratio of from 3.0 to 7.5, preferably from 4.0 to 7.0, more preferably from 5.0 to 6.0.

9. The monoaxially oriented film according to any one of the preceding claims wherein the first polyethylene fraction (A-1) is an ethylene homopolymer fraction.

10. The monoaxially oriented film according to any one of the preceding claims wherein the second polyethylene fraction (A-2) is an ethylene copolymer fraction with one or more comonomer units selected from C3 to C12 alpha-olefin monomers, preferably from C4 to C8 alpha- olefin monomers, more preferably from 1-butene and 1-hexene, most preferably from 1-butene.

11. The monoaxially oriented film according to any one of the preceding claims wherein the second high density polyethylene (B) has one or more, preferably all of the following properties:

• a weight average molecular weight Mw of from 30000 to 100000 g/mol, preferably from 40000 to 75000 g/mol, more preferably from 45000 to 60000 g/mol;
• a z average molecular weight Mz of from 175000 to 350000 g/mol, preferably from 200000 to 325000 g/mol, more preferably from 225000 to 300000 g/mol;
• a Mw/Mn ratio of from 2.5 to 8.5, preferably from 3.0 to 7.0, more preferably from 4.0 to 6.0; and/or
• a Mz/Mw ratio of from 2.5 to 8.5, preferably from 3.5 to 7.5, more preferably from 4.0 to 6.5.

12. The monoaxially oriented film according to any one of the preceding claims wherein the second high density polyethylene (B) is a copolymer of ethylene with one or more comonomer units selected from C3 to C12 alpha-olefin monomers, preferably from C4 to C8 alpha- olefin monomers, more preferably from 1-butene and 1-hexene, most preferably from 1-butene.

13. The monoaxially oriented film according to any one of the preceding claims wherein the second high density polyethylene (B) is unimodal.

14. The monoaxially oriented film according to any one of the preceding claims wherein the polymeric components of the polyethylene composition consist of the multimodal high density polyethylene (A) and the second high density polyethylene (B).

15. The use of a polyethylene composition having a density of from 945.0 to 970.0 kg/m$^3$, determined according to ISO 1183, and a melt flow rate MFR$_2$ of from 0.5 to 7.5 g/10 min, determined according to ISO 1133 at a temperature of 190°C and a load of 2.16 kg, wherein the polyethylene composition comprises

(A) from 70.0 to 92.0 wt%, based on the total weight of the polyethylene composition, of a multimodal high density polyethylene having a density of from 945 to 970 kg/m$^3$, determined according to ISO 1183, and a melt flow rate MFR$_2$ of 0.05 to 4.0 g/10 min, determined according to ISO 1133 at a temperature of 190°C and a load of 2.16 kg;
wherein the multimodal high density polyethylene (A) comprises at least two polyethylene fractions (A-1) and (A-2)

(A-1) from 40 to 60 wt%, based on the total weight of the multimodal high density polyethylene (A), of a first polyethylene fraction having a density of from 955 to 980 kg/m$^3$, determined according to ISO 1183, and a melt flow rate MFR$_2$ of 50 to 600 g/10 min, determined according to ISO 1133 at a temperature of 190°C and a load of 2.16 kg; and
(A-2) from 40 to 60 wt%, based on the total weight of the multimodal high density polyethylene (A), of second polyethylene fraction having a density of from 925 to 970 kg/m$^3$, determined according to ISO 1183, and a melt flow rate MFR$_2$ of 0.00001 to 1.0 g/10 min, determined according to ISO 1133 at a temperature of 190°C and a load of 2.16 kg;

(B) from 8.0 to 30.0 wt%, based on the total weight of the polyethylene composition, of a second high density polyethylene having a density of from 955 to 980 kg/m$^3$, determined according to ISO 1183, and a melt flow rate MFR$_2$ of from 5.0 to 100 g/10 min, determined according to ISO 1133 at a temperature of 190°C and a load of 2.16 kg

for the production of a monoaxially oriented film according to any one of the preceding claims.

**Patentansprüche**

1. Monoaxial orientierte Folie, umfassend eine Polyethylenzusammensetzung mit einer Dichte von 945,0 bis 970,0 kg/m$^3$, bestimmt gemäß ISO 1183, und einer Schmelzflußrate MFR$_2$ von 0,5 bis 7,5 g/10 min, bestimmt gemäß ISO 1133 bei einer Temperatur von 190°C und einer Last von 2,16 kg, wobei die Polyethylenzusammensetzung umfaßt

   (A) von 70,0 bis 92,0 Gew.-%, bezogen auf das Gesamtgewicht der Polyethylenzusammensetzung, eines multimodalen Polyethylens hoher Dichte mit einer Dichte von 945 bis 970 kg/m$^3$, bestimmt gemäß ISO 1183, und einer Schmelzflussrate MFR$_2$ von 0,05 bis 4,0 g/10 min, bestimmt gemäß ISO 1133 bei einer Temperatur von 190°C und einer Last von 2,16 kg;
   wobei das multimodale Polyethylen hoher Dichte (A) mindestens zwei Polyethylenfraktionen (A-1) und (A-2) umfasst

   (A-1) von 40 bis 60 Gew.-%, bezogen auf das Gesamtgewicht des multimodalen Polyethylens hoher Dichte (A), einer ersten Polyethylenfraktion mit einer Dichte von 955 bis 980 kg/m$^3$, bestimmt gemäß ISO 1183, und einer Schmelzflussrate MFR$_2$ von 50 bis 600 g/10 min, bestimmt gemäß ISO 1133 bei einer Temperatur von 190°C und einer Last von 2,16 kg; und
   (A-2) von 40 bis 60 Gew.-%, bezogen auf das Gesamtgewicht des multimodalen Polyethylens hoher Dichte (A), einer zweiten Polyethylenfraktion mit einer Dichte von 925 bis 970 kg/m$^3$, bestimmt gemäß ISO 1183, und einer Schmelzflussrate MFR$_2$ von 0,00001 bis 1,0 g/10 min, bestimmt gemäß ISO 1133 bei einer Temperatur von 190°C und einer Last von 2,16 kg;

   (B) von 8,0 bis 30,0 Gew.-%, bezogen auf das Gesamtgewicht der Polyethylenzusammensetzung, eines zweiten Polyethylens hoher Dichte mit einer Dichte von 955 bis 980 kg/m$^3$, bestimmt gemäß ISO 1183, und einer Schmelzflussrate MFR$_2$ von 5,0 bis 100 g/10 min, bestimmt gemäß ISO 1133 bei einer Temperatur von 190°C und einer Last von 2,16 kg.

2. Die monoaxial orientierte Folie nach Anspruch 1, die nur in Maschinenrichtung orientiert ist (MDO-Folie).

3. Die monoaxial orientierte Folie nach Anspruch 1 oder 2, wobei das Streckverhältnis zum Orientieren der Folie in einer Richtung von 2:1 bis 10:1, bevorzugt von 4:1 bis 8:1, besonders bevorzugt von 5:1 bis 7:1 beträgt.

4. Die monoaxial orientierte Folie nach einem der vorhergehenden Ansprüche, die eine einschichtige Folie oder eine Schicht einer mehrschichtigen Folie ist.

5. Die monoaxial orientierte Folie nach einem der vorhergehenden Ansprüche, die als gegossene Folie oder als Blasfolie hergestellt wird, die in eine Richtung verstreckt wird.

6. Die monoaxial orientierte Folie nach einem der vorhergehenden Ansprüche, die eine Dicke von 5 bis 100 $\mu$m, bevorzugt von 10 bis 75 $\mu$m, besonders bevorzugt von 15 bis 50 $\mu$m hat.

7. Die monoaxial orientierte Folie nach einem der vorhergehenden Ansprüche, die eine oder mehrere, vorzugsweise alle der folgenden Eigenschaften aufweist:

   • eine Trübung von 1,0 bis 20,0 %, bevorzugt von 1,0 bis 17,5 %, besonders bevorzugt von 2,5 bis 15,0 %, bestimmt gemäß ASTM D1003 an einer MDO-Blasfolienprobe (Streckverhältnis 6:1) mit einer Dicke von 20 $\mu$m;
   • eine Klarheit von 90,0 bis 99,0 %, bevorzugt von 92,5 bis 99,0 %, besonders bevorzugt von 94,0 bis 98,0 %, bestimmt gemäß ASTM D1003 an einer MDO-Blasfolienprobe (Streckverhältnis 6:1) mit einer Dicke von 20 $\mu$m;
   • einen Zugmodul in Maschinenrichtung (TM-MD) von 2000 bis 3000 MPa, bevorzugt von 2100 bis 3000 MPa, besonders bevorzugt von 2200 bis 2800 MPa, bestimmt gemäß ISO 527-3 an einer MDO-Blasfolienprobe (Streckverhältnis 6:1) mit einer Dicke von 20 $\mu$m;
   • einen Zugmodul in Querrichtung (TM-TD) von 2000 bis 3000 MPa, bevorzugt von 2200 bis 3000 MPa, besonders bevorzugt von 2400 bis 2800 MPa, bestimmt gemäß ISO 527-3 an einer MDO-Blasfolienprobe (Streckverhältnis 6:1) mit einer Dicke von 20 $\mu$m; und/oder
   • ein Verhältnis von Zugmodul in Maschinenrichtung (TM-MD) zu Haze (TM-MD/haze) von 100 bis 300 [MPa/%], bevorzugt von 125 bis 275 [MPa/%], besonders bevorzugt von 150 bis 250 [MPa/%], bestimmt an einer MDO-Blasfolienprobe (Streckverhältnis 6:1) mit einer Dicke von 20 μm.

8. Die monoaxial orientierte Folie nach einem der vorhergehenden Ansprüche, wobei das multimodale Polyethylen hoher Dichte (A) eine oder mehrere, vorzugsweise alle der folgenden Eigenschaften aufweist:

• eine Schmelzflussrate $MFR_{21}$ von 15 bis 75 g/10 min, bevorzugt von 20 bis 65 g/10 min, besonders bevorzugt von 30 bis 55 g/10 min, bestimmt gemäß ISO 1133 bei einer Temperatur von 190°C und einer Last von 21,6 kg;
• ein Durchflussverhältnis $FRR_{21/2}$, das dem Verhältnis von $MFR_{21}$ zu $MFR_2$ entspricht, von 35 bis 85, bevorzugt von 45 bis 75, besonders bevorzugt von 50 bis 65;
• eine Schmelztemperatur Tm von 125 bis 150°C, bevorzugt von 126 bis 145°C, besonders bevorzugt von 128 bis 138°C;
• eine Kristallisationstemperatur Tc von 105 bis 130°C, bevorzugt von 110 bis 127°C, besonders bevorzugt von 115 bis 125°C;
• eine Schmelzenthalpie Hm von 170 bis 250 J/g, bevorzugt von 185 bis 240 J/g, besonders bevorzugt von 200 bis 225 J/g;
• ein gewichtsmittleres Molekulargewicht Mw von 115000 bis 140000 g/mol, bevorzugt von 120000 bis 135000 g/mol, besonders bevorzugt von 125000 bis 132000 g/mol;
• ein z mittleres Molekulargewicht Mz von 600000 bis 750000 g/mol, bevorzugt von 625000 bis 735000 g/mol, besonders bevorzugt von 650000 bis 725000 g/mol;
• ein Mw/Mn-Verhältnis von 10,0 bis 22,5, bevorzugt von 11,0 bis 20,0, besonders bevorzugt von 12,0 bis 17,5; und/oder
• ein Mz/Mw-Verhältnis von 3,0 bis 7,5, bevorzugt von 4,0 bis 7,0, besonders bevorzugt von 5,0 bis 6,0.

9. Die monoaxial orientierte Folie nach einem der vorhergehenden Ansprüche, wobei die erste Polyethylenfraktion (A-1) eine Ethylenhomopolymerfraktion ist.

10. Die monoaxial orientierte Folie nach einem der vorhergehenden Ansprüche, wobei die zweite Polyethylenfraktion (A-2) eine Copolymerfraktion von Ethylen mit einer oder mehreren Comonomereinheiten ist, die aus C3- bis C12-alpha-Olefinmonomeren, bevorzugt aus C4- bis C8-alpha-Olefinmonomeren, besonders bevorzugt aus 1-Buten und 1-Hexen, am meisten bevorzugt aus 1-Buten ausgewählt sind.

11. Die monoaxial orientierte Folie nach einem der vorhergehenden Ansprüche, wobei das zweite Polyethylen hoher Dichte (B) eine oder mehrere, vorzugsweise alle der folgenden Eigenschaften aufweist:

• ein gewichtsmittleres Molekulargewicht Mw von 30000 bis 100000 g/mol, vorzugsweise von 40000 bis 75000 g/mol, besonders bevorzugt von 45000 bis 60000 g/mol;
• ein z mittleres Molekulargewicht Mz von 175000 bis 350000 g/mol, bevorzugt von 200000 bis 325000 g/mol, besonders bevorzugt von 225000 bis 300000 g/mol;
• ein Mw/Mn-Verhältnis von 2,5 bis 8,5, bevorzugt von 3,0 bis 7,0, besonders bevorzugt von 4,0 bis 6,0; und/oder
• ein Mz/Mw-Verhältnis von 2,5 bis 8,5, bevorzugt von 3,5 bis 7,5, besonders bevorzugt von 4,0 bis 6,5.

12. Die monoaxial orientierte Folie nach einem der vorhergehenden Ansprüche, wobei das zweite Polyethylen hoher Dichte (B) ein Copolymer von Ethylen mit einer oder mehreren Comonomereinheiten ist, die aus C3- bis C12-alpha-Olefinmonomeren, bevorzugt aus C4- bis C8-alpha-Olefinmonomeren, besonders bevorzugt aus 1-Buten und 1-Hexen, am meisten bevorzugt aus 1-Buten, ausgewählt sind.

13. Die monoaxial orientierte Folie nach einem der vorhergehenden Ansprüche, wobei das zweite Polyethylen hoher Dichte (B) unimodal ist.

14. Die monoaxial orientierte Folie nach einem der vorhergehenden Ansprüche, wobei die polymeren Komponenten der Polyethylenzusammensetzung aus dem multimodalen Polyethylen hoher Dichte (A) und dem zweiten Polyethylen hoher Dichte (B) bestehen.

15. Die Verwendung einer Polyethylenzusammensetzung mit einer Dichte von 945,0 bis 970,0 kg/m³, bestimmt gemäß ISO 1183, und einer Schmelzflußrate $MFR_2$ von 0,5 bis 7,5 g/10 min, bestimmt gemäß ISO 1133 bei einer Temperatur von 190°C und einer Last von 2,16 kg, wobei die Polyethylenzusammensetzung umfaßt

(A) von 70,0 bis 92,0 Gew.-%, bezogen auf das Gesamtgewicht der Polyethylenzusammensetzung, eines multimodalen Polyethylens hoher Dichte mit einer Dichte von 945 bis 970 kg/m$^3$, bestimmt gemäß ISO 1183, und einer Schmelzflussrate MFR$_2$ von 0,05 bis 4,0 g/10 min, bestimmt gemäß ISO 1133 bei einer Temperatur von 190°C und einer Last von 2,16 kg;

wobei das multimodale Polyethylen hoher Dichte (A) mindestens zwei Polyethylenfraktionen (A-1) und (A-2) umfasst

(A-1) von 40 bis 60 Gew.-%, bezogen auf das Gesamtgewicht des multimodalen Polyethylens hoher Dichte (A), einer ersten Polyethylenfraktion mit einer Dichte von 955 bis 980 kg/m$^3$, bestimmt gemäß ISO 1183, und einer Schmelzflussrate MFR$_2$ von 50 bis 600 g/10 min, bestimmt gemäß ISO 1133 bei einer Temperatur von 190°C und einer Last von 2,16 kg; und

(A-2) von 40 bis 60 Gew.-%, bezogen auf das Gesamtgewicht des multimodalen Polyethylens hoher Dichte (A), einer zweiten Polyethylenfraktion mit einer Dichte von 925 bis 970 kg/m$^3$, bestimmt gemäß ISO 1183, und einer Schmelzflussrate MFR$_2$ von 0,00001 bis 1,0 g/10 min, bestimmt gemäß ISO 1133 bei einer Temperatur von 190°C und einer Last von 2,16 kg;

(B) von 8,0 bis 30,0 Gew.-%, bezogen auf das Gesamtgewicht der Polyethylenzusammensetzung, eines zweiten Polyethylens hoher Dichte mit einer Dichte von 955 bis 980 kg/m$^3$, bestimmt gemäß ISO 1183, und einer Schmelzflussrate MFR$_2$ von 5,0 bis 100 g/10 min, bestimmt gemäß ISO 1133 bei einer Temperatur von 190°C und einer Last von 2,16 kg

zur Herstellung einer monoaxial orientierten Folie nach einem der vorhergehenden Ansprüche.

**Revendications**

1. Film à orientation monoaxiale comprenant une composition de polyéthylène présentant une densité de 945,0 à 970,0 kg/m$^3$, déterminée selon ISO 1183, et un indice de fluidité MFR$_2$ de 0,5 à 7,5 g/10 min, déterminé selon ISO 1133 à une température de 190 °C et une charge de 2,16 kg, dans lequel la composition de polyéthylène comprend

(A) de 70,0 à 92,0 % en poids, sur la base du poids total de la composition de polyéthylène, d'un polyéthylène multimodal haute densité ayant une densité de 945 à 970 kg/m$^3$, déterminée selon ISO 1183, et un indice de fuidité MFR$_2$ de 0,05 à 4,0 g/10 min, déterminé selon ISO 1133 à une température de 190 °C et une charge de 2,16 kg ;

dans lequel le polyéthylène multimodal haute densité (A) comprend au moins deux fractions de polyéthylène (A-1) et (A-2)

(A-1) de 40 à 60 % en poids, sur la base du poids total du polyéthylène multimodal haute densité (A), d'une première fraction de polyéthylène ayant une densité de 955 à 980 kg/m$^3$, déterminée selon ISO 1183, et un indice de fluidité MFR$_2$ de 50 à 600 g/10 min, déterminé selon ISO 1133 à une température de 190 °C et une charge de 2,16 kg ; et

(A-2) de 40 à 60 % en poids, sur la base du poids total du polyéthylène multimodal haute densité (A), d'une deuxième fraction de polyéthylène ayant une densité de 925 à 970 kg/m$^3$, déterminée selon ISO 1183, et un indice de fluidité MFR$_2$ de 0,00001 à 1,0 g/10 min, déterminé selon ISO 1133 à une température de 190 °C et une charge de 2,16 kg ;

(B) de 8,0 à 30,0 % en poids, sur la base du poids total de la composition de polyéthylène, d'un deuxième polyéthylène haute densité ayant une densité de 955 à 980 kg/m$^3$, déterminée selon ISO 1183, et un indice de fuidité MFR2 de 5,0 à 100 g/10 min, déterminé selon ISO 1133 à une température de 190 °C et une charge de 2,16 kg.

2. Film à orientation monoaxiale selon la revendication 1, qui est orienté uniquement dans le sens machine (film MDO).

3. Film à orientation monoaxiale selon la revendication 1 ou 2, dans lequel le rapport d'étirement pour orienter le film dans une direction est de 2:1 à 10:1, de préférence de 4:1 à 8:1, plus préférablement de 5:1 à 7:1.

4. Film à orientation monoaxiale selon l'une des revendications précédentes, qui est un film monocouche ou une couche d'un film multicouche.

**5.** Film à orientation monoaxiale selon l'une des revendications précédentes, qui est préparé sous forme d'un film coulé ou d'un film soufflé, qui est étiré dans une direction.

**6.** Film à orientation monoaxiale selon l'une des revendications précédentes, ayant une épaisseur de 5 à 100 $\mu$m, de préférence de 10 à 75 $\mu$m, plus préférablement de 15 à 50 $\mu$m.

**7.** Film à orientation monoaxiale selon l'une des revendications précédentes ayant une ou plusieurs, de préférence toutes les propriétés suivantes :

- un voile de 1,0 à 20,0 %, de préférence de 1,0 à 17,5 %, plus préférablement de 2,5 à 15,0 %, déterminé selon ASTM D1003 sur un échantillon de film soufflé MDO (rapport d'étirement 6:1) ayant une épaisseur de 20 $\mu$m ;
- une clarté de 90,0 à 99,0 %, de préférence de 92,5 à 99,0 %, plus préférablement de 94,0 à 98,0 %, déterminée selon ASTM D1003 sur un échantillon de film soufflé MDO (rapport d'étirement 6:1) ayant une épaisseur de 20 $\mu$m ;
- un module de traction dans le sens machine (TM-MD) de 2000 à 3000 MPa, de préférence de 2100 à 3000 MPa, plus préférablement de 2200 à 2800 MPa, déterminé selon ISO 527-3 sur un échantillon de film soufflé MDO (rapport d'étirement 6:1) ayant une épaisseur de 20 $\mu$m ;
- un module de traction dans le sens transversal (TM-TD) de 2000 à 3000 MPa, de préférence de 2200 à 3000 MPa, plus préférablement de 2400 à 2800 MPa, déterminé selon ISO 527-3 sur un échantillon de film soufflé MDO (rapport d'étirement 6:1) ayant une épaisseur de 20 $\mu$m ; et/ou
- un rapport entre le module de traction dans le sens machine (TM-MD) et le voile (TM-MD/voile) de 100 à 300 [MPa/%], de préférence de 125 à 275 [MPa/%], plus préférablement de 150 à 250 [MPa/ô], déterminé sur un échantillon de film soufflé MDO (rapport d'étirement 6:1) ayant une épaisseur de 20 pm.

**8.** Film à orientation monoaxiale selon l'une des revendications précédentes, dans lequel le polyéthylène multimodal haute densité (A) possède une ou plusieurs, de préférence toutes les propriétés suivantes :

- un indice de fluidité $MFR_{21}$ de 15 à 75 g/10 min, de préférence de 20 à 65 g/10 min, plus préférablement de 30 à 55 g/10 min, déterminé selon ISO 1133 à une température de 190 °C et une charge de 21,6 kg ;
- un rapport de débit $FRR_{21/2}$, qui est le rapport entre $MFR_{21}$ et $MFR_2$, de 35 à 85, de préférence de 45 à 75, plus préférablement de 50 à 65 ;
- une température de fusion Tm de 125 à 150 °C, de préférence de 126 à 145 °C, plus préférablement de 128 à 138 °C ;
- une température de cristallisation Tc de 105 à 130 °C, de préférence de 110 à 127 °C, plus préférablement de 115 à 125 °C ;
- une enthalpie de fusion Hm de 170 à 250 J/g, de préférence de 185 à 240 J/g, plus préférablement de 200 à 225 J/g ;
- un poids moléculaire moyen en poids Mw de 115000 à 140000 g/mol, de préférence de 120000 à 135000 g/mol, plus préférablement de 125000 à 132000 g/mol ;
- un poids moléculaire moyen z Mz de 600000 à 750000 g/mol, de préférence de 625000 à 735000 g/mol, plus préférablement de 650000 à 725000 g/mol ;
- un rapport Mw/Mn de 10,0 à 22,5, de préférence de 11,0 à 20,0, plus préférablement de 12,0 à 17,5 ; et/ou
- un rapport Mz/Mw de 3,0 à 7,5, de préférence de 4,0 à 7,0, plus préférablement de 5,0 à 6,0.

**9.** Film à orientation monoaxiale selon l'une des revendications précédentes, dans lequel la première fraction de polyéthylène (A-1) est une fraction d'homopolymère d'éthylène.

**10.** Film à orientation monoaxiale selon l'une des revendications précédentes, dans lequel la deuxième fraction de polyéthylène (A-2) est une fraction de copolymère d'éthylène avec une ou plusieurs unités comonomères sélectionnées parmi des monomères d'alpha-oléfine en C3 à C12, de préférence des monomères d'alpha-oléfine en C4 à C8, plus préférablement du 1-butène et du 1-hexène, de manière la plus préférée du 1-butène.

**11.** Film à orientation monoaxiale selon l'une des revendications précédentes, dans lequel le deuxième polyéthylène haute densité (B) possède une ou plusieurs, de préférence toutes les propriétés suivantes :

- un poids moléculaire moyen en poids Mw de 30000 à 100000 g/mol, de préférence de 40000 à 75000 g/mol, plus préférablement de 45000 à 60000 g/mol ;

• un poids moléculaire moyen z Mz de 175000 à 350000 g/mol, de préférence de 200000 à 325000 g/mol, plus préférablement de 225000 à 300000 g/mol ;
• un rapport Mw/Mn de 2,5 à 8,5, de préférence de 3,0 à 7,0, plus préférablement de 4,0 à 6,0 ; et/ou
• un rapport Mz/Mw de 2,5 à 8,5, de préférence de 3,5 à 7,5, plus préférablement de 4,0 à 6,5.

12. Film à orientation monoaxiale selon l'une des revendications précédentes, dans lequel le deuxième polyéthylène haute densité (B) est un copolymère d'éthylène avec une ou plusieurs unités comonomères sélectionnées parmi des monomères d'alpha-oléfine en C3 à C12, de préférence des monomères d'alpha-oléfine en C4 à C8, plus préférablement du 1-butène et du 1-hexène, de manière la plus préférée du 1-butène.

13. Film à orientation monoaxiale selon l'une des revendications précédentes, dans lequel le deuxième polyéthylène haute densité (B) est unimodal.

14. Film à orientation monoaxiale selon l'une des revendications précédentes, dans lequel les composants polymères de la composition de polyéthylène sont constitués du polyéthylène multimodal haute densité (A) et du deuxième polyéthylène haute densité (B).

15. Utilisation d'une composition de polyéthylène présentant une densité de 945,0 à 970,0 kg/m³, déterminée selon ISO 1183, et un indice de fluidité $MFR_2$ de 0,5 à 7,5 g/10 min, déterminé selon ISO 1133 à une température de 190 °C et une charge de 2,16 kg, dans laquelle la composition de polyéthylène comprend

(A) de 70,0 à 92,0 % en poids, sur la base du poids total de la composition de polyéthylène, d'un polyéthylène multimodal haute densité ayant une densité de 945 à 970 kg/m³, déterminée selon ISO 1183, et un indice de fuidité $MFR_2$ de 0,05 à 4,0 g/10 min, déterminé selon ISO 1133 à une température de 190 °C et une charge de 2,16 kg ;
dans lequel le polyéthylène multimodal haute densité (A) comprend au moins deux fractions de polyéthylène (A-1) et (A-2)

(A-1) de 40 à 60 % en poids, sur la base du poids total du polyéthylène multimodal haute densité (A), d'une première fraction de polyéthylène ayant une densité de 955 à 980 kg/m³, déterminée selon ISO 1183, et un indice de fluidité $MFR_2$ de 50 à 600 g/10 min, déterminé selon ISO 1133 à une température de 190 °C et une charge de 2,16 kg ; et
(A-2) de 40 à 60 % en poids, sur la base du poids total du polyéthylène multimodal haute densité (A), d'une deuxième fraction de polyéthylène ayant une densité de 925 à 970 kg/m³, déterminée selon ISO 1183, et un indice de fluidité $MFR_2$ de 0,00001 à 1,0 g/10 min, déterminé selon ISO 1133 à une température de 190 °C et une charge de 2,16 kg ;

(B) de 8,0 à 30,0 % en poids, sur la base du poids total de la composition de polyéthylène, d'un deuxième polyéthylène haute densité ayant une densité de 955 à 980 kg/m³, déterminée selon ISO 1183, et un indice de fuidité $MFR_2$ de 5,0 à 100 g/10 min, déterminé selon ISO 1133 à une température de 190 °C et une charge de 2,16 kg

pour la production d'un film à orientation monoaxiale selon l'une des revendications précédentes.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020325316 A1
- WO 2005092595 A
- WO 9744371 A
- WO 9618662 A
- US 4582816 A
- US 3405109 A
- US 3324093 A
- EP 479186 A
- US 5391654 A
- US 3374211 A
- US 3242150 A
- EP 1310295 A
- EP 891990 A
- EP 1415999 A

- EP 1591460 A
- WO 2007025640 A
- WO 9619503 A
- WO 9632420 A
- EP 1378528 A1
- EP 688794 A
- WO 9951646 A
- WO 0155230 A
- WO 2005118655 A
- EP 810235 A
- WO 2014096296 A
- WO 2016097193 A
- EP 2994506 A
- EP 1780225 A1

**Non-patent literature cited in the description**

- **B. HAGSTRÖM.** Conference on Polymer Processing (The Polymer Processing Society). *Extended Abstracts and Final Programme, Gothenburg, August 19 to 21, 1997,* 19 August 1997, vol. 4, 13
- *IUPAC, Nomenclature of Inorganic Chemistry,* 1989
- **KLIMKE, K. ; PARKINSON, M. ; PIEL, C. ; KAMINSKY, W. ; SPIESS, H.W. ; WILHELM, M.** *Macromol. Chem. Phys.,* 2006, vol. 207, 382
- **PARKINSON, M. ; KLIMKE, K. ; SPIESS, H.W. ; WILHELM, M.** *Macromol. Chem. Phys.,* 2007, vol. 208, 2128
- **POLLARD, M. ; KLIMKE, K. ; GRAF, R. ; SPIESS, H.W. ; WILHELM, M. ; SPERBER, O. ; PIEL, C. ; KAMINSKY, W.** *Macromolecules,* 2004, vol. 37, 813
- **FILIP, X. ; TRIPON, C. ; FILIP, C.** *J. Mag. Resn.,* 2005, vol. 176, 239

- **GRIFFIN, J.M. ; TRIPON, C. ; SAMOSON, A. ; FILIP, C. ; BROWN, S.P.** *Mag. Res. in Chem.,* 2007, vol. 45, S1, , S198
- **CASTIGNOLLES, P. ; GRAF, R. ; PARKINSON, M. ; WILHELM, M. ; GABORIEAU, M.** *Polymer,* 2009, vol. 50, 2373
- **BUSICO, V. ; CIPULLO, R.** *Prog. Polym. Sci.,* 2001, vol. 26, 443
- **BUSICO, V. ; CIPULLO, R. ; MONACO, G. ; VACATELLO, M. ; SEGRE, A.L.** *Macromoleucles,* 1997, vol. 30, 6251
- **ZHOU, Z. ; KUEMMERLE, R. ; QIU, X. ; REDWINE, D. ; CONG, R. ; TAHA, A. ; BAUGH, D. ; WINNIFORD, B.** *J. Mag. Reson.,* 2007, vol. 187, 225
- **RESCONI, L. ; CAVALLO, L. ; FAIT, A. ; PIEMONTESI, F.** *Chem. Rev.,* 2000, vol. 100, 1253